**Europäisches Patentamt**

**European Patent Office**

**Office européen des brevets**

(19)

(11) Veröffentlichungsnummer: **0 129 736**
**B1**

(12) # EUROPÄISCHE PATENTSCHRIFT

(45) Veröffentlichungstag der Patentschrift:
18.01.89

(51) Int. Cl.⁴: **H 01 L 21/268,** H 01 L 27/08,
H 01 L 29/84

(21) Anmeldenummer: **84106140.1**

(22) Anmeldetag: **29.05.84**

(54) Sensor mit polykristallinen Silicium-Widerständen.

(30) Priorität: 30.05.83 DE 3319605

(43) Veröffentlichungstag der Anmeldung:
02.01.85 Patentblatt 85/1

(45) Bekanntmachung des Hinweises auf die Patenterteilung:
18.01.89 Patentblatt 89/3

(84) Benannte Vertragsstaaten:
DE FR GB IT

(56) Entgegenhaltungen:
EP-A- 0 056 972
DE-A- 2 837 316
GB-A- 2 104 288
US-A- 4 198 246

IBM TECHNICAL DISCLOSURE BULLETIN Band 24, Nr.
11A, April 1982, New York, USA; L. BERGERON
"Temperature-stable resistor", Seiten 5463-5465

(73) Patentinhaber: **Siemens Aktiengesellschaft Berlin und
München, Wittelsbacherplatz 2, D-8000 München 2 (DE)**

(72) Erfinder: **Binder, Josef, Dr. Dipl.-Phys.,
Hochäckerstrasse 12, D-8000 München 90 (DE)**
Erfinder: **Cutter, David, Dr. Dipl.-Phys.,
Zehntfeldstrasse 117, D-8000 München 82 (DE)**
Erfinder: **Henning, Wolfgang, Dr. Dipl.-Phys., Herzog
Tassilo Ring 11, D-8011 Zorneding (DE)**
Erfinder: **Schaber, Hans-Christian, Dr. Dipl.-Phys.,
Kreuzlingerstrasse 72, D-8034 Germering (DE)**
Erfinder: **Möllmer, Frank, Dipl.-Ing., Am Mühlgraben 4,
D-8401 Pentling (DE)**
Erfinder: **Reichert, Hansjörg Dr. Dipl.-Phys.,
Weissenseestrasse 83, D-8000 München 90 (DE)**

**Beschreibung**

Die Erfindung betrifft einen Sensor mit polykristallinen Silizium-Widerständen sowie ein Verfahren zu seiner Herstellung.

Die Entwicklung technisch und wirtschaftlich leistungsfähiger Sensoren ist für die Herstellung einer kostengünstigen Peripherik für die Mikroelektronik, Mess-, Steuer- und Regeltechnik von entscheidender Bedeutung.

Derzeit ist bei der Herstellung von Sensoren der Abgleich der Systemparameter sowie der Abgleich der Temperaturabhängigkeiten, z.B. durch eine Beschaltung mit geeigneten Widerständen, nur mit grossem Aufwand zu bewältigen, so dass solche Sensoren in Mengenmärkten nicht eingesetzt werden. Bei Beschaltungswiderständen von Sensoren bereitet insbesondere das gleichzeitige Einstellen von bestimmten Widerstandswerten und bestimmten zugeordneten Temperaturkoeffizienten erhebliche Schwierigkeiten. So sind für diesen Zweck z.B. aufgedampfte Chrom-Nickel-Widerstände nicht sinnvoll einsetzbar.

Aus EP-A-0 056 972 ist ein Bauelement bekannt, das die geometrischen Abmessungen und die Beschaffenheit eines Halbleiter-Sensors hat. Ein Bauelement kann aus einer polykristallinen Halbleiterschicht bestehen, die zur Erzeugung einer Leitfähigkeit elektrisch dotierbar ist. Ein Bauelement kann aus einer dotierten oder nicht dotierten polykristallinen Siliziumschicht bestehen. Es ist bekannt, dass sich der Schichtwiderstand und weitere physikalische Eigenschaften wie z.B. der Temperatur- und der piezoresistive Koeffizient besonders in polykristallinen Schichten ändern, wenn diese mit intensiver optischer Strahlung, z.B. Laserstrahlung, behandelt werden. Das zu behandelnde Bauelement wird in ein System zur Erzeugung vorbestimmter Umgebungsbedingungen eingebettet. Eine Vorrichtung zur Durchführung des Verfahrens ist dabei so ausgebildet, dass sich das Bauelement auf einen bestimmten Umgebungszustand einstellen lässt. Neben der Einstellung eines vorgegebenen Temperaturkoeffizienten ist auf diese Weise ebenfalls eine präzise Einstellung auf den Temperaturkoeffizienten Null möglich.

Aufgabe der vorliegenden Erfindung ist es, einen Sensor zu schaffen, dessen Widerstände bezüglich der Widerstandswerte sowie der zugeordneten Temperaturkoeffizienten auf einfache Weise einstellbar sind und sich ausserdem technologisch kompatibel und kostengünstig für die Beschaltung von abzugleichenden Bauelementen einsetzen lassen. Ausserdem soll ein Verfahren zur wirtschaftlichen Herstellung eines solchen Sensors angegeben werden.

Die Erfindung besteht darin, dass ein Sensor auf einem Substrat als Widerstände nur dotierte polykristalline Silizium-Widerstände aufweist, dass der Sensor eine vor dem Abgleich der Widerstände auf die Widerstände aufgebrachte Passivierungsschicht aufweist, dass bei dem Sensor die Widerstände durch räumlich selektive Laserausheilung, das bedeutet teilweise Rekristallisation, so abgeglichen sind, dass gleichzeitig ein minimaler Offset, eine ausreichende Empfindlichkeit und minimale Temperaturkoeffizienten desjenigen Widerstands, an dem das Ausgangssignal anliegt, sowie des Offsets und der Empfindlichkeit erzielt sind.

Die Erfindung ermöglicht eine Schaltung mit einer Sensor-Messzelle in Silicium-Planar-Technologie mit dazu kompatibler Technologie des rekristallisierbaren, laserabgleichbaren, polykristallinen Siliciums. Die Sensor-Messzelle ist in den Parametern Offset und Empfindlichkeit sowie deren Temperaturabhängigkeiten abgleichbar.

Bei dem Abgleichverfahren wird sowohl die Eigenschaft des lokalen, beispielsweise durch Laserbestrahlung durchzuführenden Ausheilens der polykristallinen Schichten genutzt, als auch der Laserabgleich selbst durch lokale Zerstörung der Siliciumschicht durchgeführt, wobei der Lasereinschnitt entweder programmiert oder durch gleichzeitige Messung des jeweiligen Widerstandes gesteuert wird.

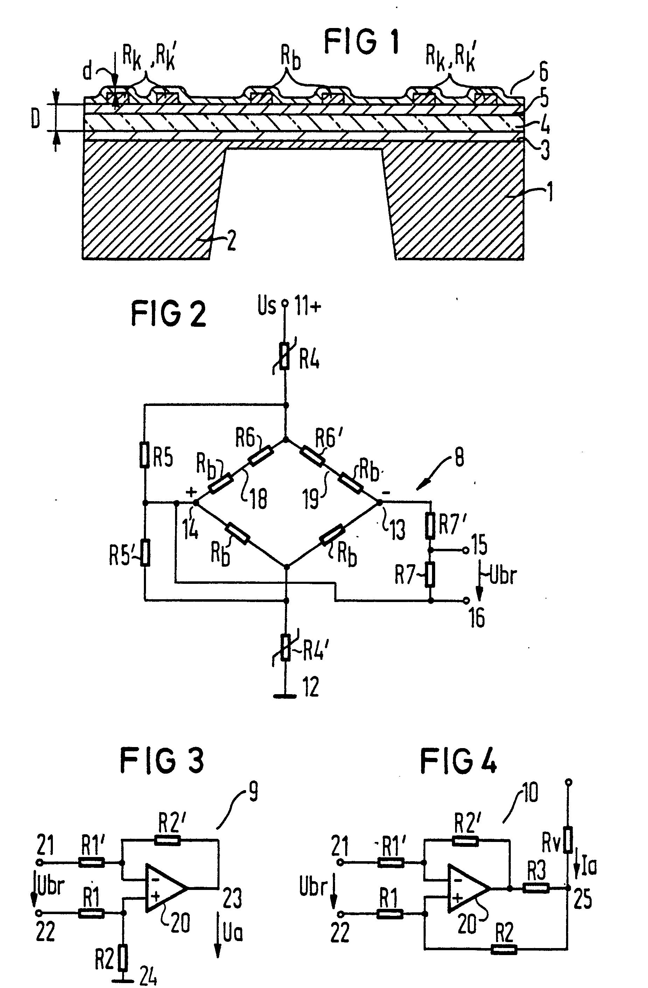

Eine optimale Einkopplung der Laserleistung erfolgt durch $\lambda/_4$-Plättchen, d.h. durch eine geeignete dielektrische Deckschicht, die gleichzeitig als Passivierung genutzt werden kann. So beträgt die Dicke d (vgl. Fig. 1) von einer Nitridschicht

$$d = \frac{\lambda_{vac} \cdot (2i + 1)}{4 \cdot n_1}$$

mit $i = 0, 1, 2, \ldots\ldots\ldots$

Mit dem Brechungsindex $n_1 = 2$ des verwendeten, aus der flüssigen Phase durch chemische Dampfabscheidung (LPCVD) aufgetragenen Nitrids und $i = 1$ ergibt sich $d = 187,5\ \mu m$ (1875 Å) bei Einsatz eines Argon-Lasers.

In Versuchen kann gezeigt werden, dass mit derartigen Schichten eine Reduktion der benötigten Laserleistungen um ca. 20% erzielt wird. Wesentlich ist ferner, dass auch mit einem Strichfokus ohne Probleme Spuren von ca. 100 μm Breite einwandfrei rekristallisiert werden können, ohne dass an den Rändern der Strukturen Bestrahlungsschäden auftreten.

Ausserdem ist bei der Erfindung vorgesehen, die Laserausheilung polykristalliner Widerstandsstrukturen, wie sie beispielsweise in Drucksensor-Messzellen Verwendung finden, durch Laserstrahlführung parallel zur Längsausdehnung dieser Strukturen durchzuführen. Durch Bestrahlung in dieser Vorzugsrichtung entstehen nur wenige, in Längsrichtung langgestreckte Körner, und der Einfluss der Korngrenzen auf den Schichtwiderstand, der bei Bestrahlung quer dazu im interessierenden Dotierungsbereich $< 10^{19}/cm^3$ bereits merklich ist, ist vernachlässigbar.

Die Sensor-Messzellen sind, wie nachfolgend anhand des Anwendungsbeispieles einer Drucksensor-Messzelle näher ausgeführt wird, bereichsweise unterschiedlich dotiert.

Vorzugsweise erfolgt die Dotierung durch Ionenimplantation in die abgeschiedene, strukturierte, polykristalline Siliciumschicht. Die Strukturierung der gegeneinander isolierten Bereiche gelingt photolithographisch mittels Lackmaskierung und Ätzung.

Die Erfindung ermöglicht auch eine abgleichbare Drucksensor-Messzelle mit polykristallinen Widerständen mit wahlweise Strom- oder Spannungsausgang zum direkten Anschluss an Operationsverstärker.

Die Fig. 2 bis 4 zeigen schematisch die Druckmesszelle mit den erforderlichen Abgleichelementen sowie die Beschaltungswiderstände für den Operationsverstärker.

Durch die Erfindung ist es möglich, Druckmesszelle und Beschaltungwiderstände für den Operationsverstärker zusammen auf einem Chip zu integrieren, um Strom- bzw. Spannungsausgangs-Varianten aus nur einem Design durch einfache Leiterbahnauftrennung zu gewinnen.

Damit ist Kostengünstigkeit auch über eine grosse Anwender-Stückzahl gewährleistet.

In der Fig. 2, die eine Drucksensor-Messzelle mit Abgleichwiderständen zeigt, bedeuten:

$U_S$ = Speisespannung der Brücke,

$U_b$ = Brückensignal,

$R_b$ (ca. 2 kΩ) = piezoresistiver Brückenwiderstand,

$R_4 = R_{4'}$ ($= 500$ Ω) = Widerstand mit hohem negativen Temperaturkoeffizienten (z.B. $-40\%/100$ °K) zur Kompensation des Empfindlichkeits-Temperaturkoeffizienten

$R_5 = R_{5'}$ ($= 50$ kΩ) = Widerstand zur Offset-Temperaturkoeffizient-Kompensation

$R_6 = R_{6'}$ ($= 250$ Ω) = Widerstand zum Offset-Abgleich,

$R_7 = R_{7'}$ ($= 2,5$ kΩ) = Widerstand zum Empfindlichkeitsabgleich.

In den Fig. 3 und 4, die einen Operationsverstärker mit Beschaltungswiderständen für Spannungs- und Stromausgang zeigen, sind die Widerstände $R_1 - R_3$ mitintegriert, und es gelten:

$$U_a = \frac{R2}{R1} U_{br}$$
$$R_1 = 2 \text{ kΩ}$$
$$R_2 = 200 \text{ kΩ}$$

$$I_a = \frac{R2}{R1 \cdot R3} \cdot U_{br}$$

$$U_E = 0 \rightarrow I_a = 0$$
$$U_E = 50 \text{ mV} \rightarrow I_a = 20 \text{ mA}$$
$$R_3 = 250 \text{ Ω}$$
$$R_v = \text{Verbraucher}$$

Die Schaltung mit polykristallinen Widerständen ist so ausgelegt, dass die benötigten Widerstandswerte im Bereich von 250 Ω bis 200 kΩ durch nur zwei unterschiedliche Dosen der nachfolgenden Implantation eingestellt werden können:

Widerstandsgruppe I: 250 Ω bis 2,5 kΩ
Widerstandsgruppe II: 50 kΩ bis 200 kΩ

Widerstandswerte innerhalb einer Widerstandgruppe unterscheiden sich nur durch ihre geometrische Form.

Alle Widerstände, ggf. mit Ausnahme des Widerstandspaares $R_4 - R_{4'}$ zur Erzielung eines möglichst negativen Temperaturkoeffizienten zur Kompensation der Temperaturabhängigkeit der Empfindlichkeit der Drucksensor-Messzelle, sind Laser-ausgeheilt.

Für den allgemeinen Funktionsabgleich ist an sich die Messung der Sensordaten bei zwei Drücken und zwei Temperaturen erforderlich. Die erhaltenen Daten werden abgespeichert und nachfolgend in den Rechner des Abgleichlasersystems eingelesen.

Zur Verfügung stehen dann folgende Werte:

$U_{A1}$ . . . . . = f (entspannte Membran und niedere Temperatur)

$U_{A2}$ . . . . . = f (belastete Membran und niedere Temperatur)

$U_{A3}$ . . . . . = f (entspannte Membran und höhere Temperatur)

$U_{A4}$ . . . . . = f (belastete Membran und höhere Temperatur).

Mit Hilfe dieser Werte wird im kalten Zustand der Abgleich durch den Abgleichlaser durchgeführt.

Es ist nun vorgesehen, den allgemeinen Funktionsabgleich durch einen vereinfachten, besonders kostengünstigen Funktionsabgleich mit «thermisch angepassten» polykristallinen Siliciumwiderständen zu ersetzen.

Man weiss, dass der Temperaturkoeffizient (TK) polykristalliner Siliciumschichten dotierungsabhängig ist.

Umfangreiche Unersuchungen ergaben, dass insbesondere bei Bestrahlung quer zur Längsausdehnung der Widerstandsstrukturen bereits im Dotierungsbereich $N \leq 10^{19} \text{ cm}^{-3}$ ein negativer TK auftritt, der auf thermisch aktiviertes Verhalten der Korngrenzen-Leitfähigkeit hinweist. Bei Bestrahlung parallel zur Längsausdehnung der Widerstandsstrukturen wurde dieser Effekt im Dotierungsbereich $N \leq 10^{16} \text{ cm}^{-3}$ beobachtet.

Der TK unbestrahlter, feinkörniger polykristalliner Siliciumstrukturen ist im untersuchten Dotierungsbereich $N = 10^{19}$ bis $10^{20} \text{ cm}^{-3}$ negativ, d.h. hauptsächlich durch Korngrenzen bestimmt.

Anders verhält sich der TK hochdotierter, parallel zur Widerstandsachse Laser-ausgeheilter Siliciumschichten mit Konzentrationen $N \geq 10^{19} \text{ cm}^{-3}$, der sehr nahe bei der Kurve für monokristallines Silicium liegt.

Daraus folgt, dass der TK im für Drucksensoren besonders interessierenden Dotierungsbereich mit Konzentrationen zwischen $N = 10^{18}$ und $10^{19}$ $\text{cm}^{-3}$ einen Nulldurchgang hat, der in der nachfolgenden Abgleichstrategie ausgenutzt werden soll.

Die Abgleichkonzeption mit «thermisch angepassten» polykristallinen Siliciumwiderständen sieht insbesondere folgende Anwendungsfälle vor:

1. Ausgangspunkt der folgenden Überlegungen ist eine hinsichtlich des Widerstands betragsmässig optimierte Ausgangsschaltung, wie sie beispielsweise in den Fig. 2 bis 4 gegeben ist. Durch die Wahl der Kompensationswiderstände $R_5 = R_{5'} = 50$ k$\Omega$ im Vergleich zu den gewählten Widerständen der Brücke um 2 k$\Omega$ ist für eine ausreichende Offset-TK-Kompensation gesorgt.

2. In diesem Fall wird ein gleiches Temperaturverhalten der Brückenwiderstände und des Abgleichwiderstandes $R_6$, $R_{6'}$ zum Abgleich des Offset-Betrages dadurch erreicht, dass für die genannten Widerstände die gleiche Dotierung eingestellt wird. Die Widerstände $R_5$, $R_{5'}$ können hierbei entfallen. Nach erfolgtem Offset-Abgleich auf Null hat damit auch der Temperaturkoeffizient des Offset den Wert Null.

3. Als Spezialfall hiervon (vgl. Pkt. 2) wird nicht nur gleiches Temperaturverhalten der Brückenwiderstände und des Abgleichwiderstandes $R_6$, $R_{6'}$ eingestellt, sondern das Temperaturverhalten auf TK = 0 gebracht. Durch diese Massnahme wird zusätzlich zu Fall 2 der Vorteil eines temperaturunabhängigen Innenwiderstandes der Brückenschaltung erreicht, wobei allerdings ein gewisser Verlust an Empfindlichkeit gegenüber Fall 2 entgegensteht. Vor- und Nachteile müssen im jeweiligen Anwendungsfall gegeneinander abgewogen werden.

4. Durch eine geeignete Dotierung der Brückenwiderstände und des Abgleichwiderstandes $R_6$, $R_{6'}$ wird die Temperaturabhängigkeit der Empfindlichkeit auf Null eingestellt.

Damit können auch die Widerstände $R_4$, $R_{4'}$ entfallen. Der piezoresistive Effekt, also die Dehnungsempfindlichkeit von Halbleitern, lässt sich bekanntlich durch den K-Faktor ausdrücken. Er ist definiert durch

$$K = \frac{\Delta R}{R_o} \frac{1}{\varepsilon}$$

wobei $\Delta R$ die Änderung des Widerstandes unter der Dehnung $\varepsilon$ und $R_o$ den Widerstandswert des unbelasteten Widerstandes bedeuten.

Untersuchungen an unterschiedlich dotierten polykristallinen Siliciumschichten, die nachfolgend Laser-rekristallisiert worden waren, ergaben, dass auch der TK der Empfindlichkeit mit zunehmender Dotierung abnimmt, ohne dass die zugehörigen K-Faktoren unzureichend kleine Werte eingenommen haben.

Bei einer Schichtdotierung von $N = 6 \cdot 10^{18}$ cm$^{-3}$ beträgt die Temperaturabhängigkeit der Empfindlichkeit noch 20% / 100°K. Der mit dem zugrundegelegten Brückendesign erreichbare K-Faktor liegt um 50.

Durch Einstellung einer Schichtdotierung $N = 2 \cdot 10^{20}$ cm$^{-3}$ wird die Temperaturabhängigkeit der Empfindlichkeit eliminiert. Der zugehörige K-Faktor hat sich nur halbiert.

Es soll ausdrücklich darauf hingewiesen werden, dass K-Faktoren in dieser Grössenordnung bei den gewählten hohen Dotierungen nur durch Laser-Rekristallisation eingestellt werden können. Die Werte bei reiner Ofenausheilung sind deutlich niedriger.

5. Der Abgleich der Empfindlichkeit wird nicht am Widerstand $R_7$, $R_{7'}$ zur Herstellung einer empfindlichkeitsnormierten Druckmesszelle vorgenommen, sondern an den mitintegrierten Beschaltungswiderständen für die Operationsverstärker $R_2/R_1$ bzw. $R_2/R_1 \cdot R_3$.

Diese Art des Abgleichs ist besonders vorteilhaft bei Spezialanwendungen mit grosser Stückzahl. Der Anwender benötigt ein normiertes Ausgangssignal $U_A$ bzw. $I_A$ am Ausgang des Operationsverstärkers. Der Widerstand $R_7$, $R_{7'}$ kann entfallen. Gleichzeitig wird damit auch der Verlust an Empfindlichkeit (ca. 30%), der mit dem Abgleich an $R_7$, $R_{7'}$ zur Einstellung einer empfindlichkeitsnormierten Drucksensor-Messzelle verbunden ist, aufgehoben.

Der Temperaturgang und damit die Dotierung der Widerstände $R_1 \ldots R_3$ ist an den jeweiligen Anwendungsfall 1–5 anzupassen.

Die mit der Passivierungsschicht in der angegebenen Schichtdicke abgedeckten Widerstände zeichnen sich gegenüber anders gedeckten oder nicht abgedeckten Widerständen an entsprechenden Sensoren dadurch aus, dass die Stabilität der Sensoren höher ist, sowie deren Toleranzen (z.B. Offsetstreuung) enger sind.

Weiter ist es vorteilhaft, dass das Substrat unterhalb der abgleichbaren polykristallinen Silicium-Widerstände mindestens eine mit optimalen Reflexionsbedingungen ausgestattete Isolationsschicht der Dicke

$$D = \frac{\lambda_{vac} \cdot (i+1)}{2 \cdot n_2}$$

enthält, wobei $\lambda_{vac}$ die Wellenlänge der verwendeten Laserleitung im Vakuum, i gleich Null oder eine natürliche Zahl und $n_2$ der Brechungsindex der Isolationsschicht ist. Durch diese Massnahme wird eine Beschädigung des Substrates durch Laserbestrahlung vermieden und somit die isolierende Wirkung des Substrates vorteilhaft in vollem Umfang erhalten.

Es ist vorteilhaft, dass das abzugleichende Halbleiterbauelement aus abgleichbaren dotierten polykristallinen Silicium-Widerstände besteht. Diese Massnahme vereinfacht das Herstellungsverfahren wesentlich. Abzugleichende Halbleiterbauelemente sind Druck-, Temperatur- und Positionssensoren.

Nachfolgend wird die Erfindung anhand der Zeichnung und eines Ausführungsbeispiels eines Drucksensors näher erläutert. Es zeigen:

Fig. 1 einen Querschnitt durch ein Ausführungsbeispiel einer Druckmesszelle mit Abgleichwiderständen,

Fig. 2 das Schaltbild einer Druckmesszelle mit Abgleichwiderstände,

Fig. 3 und 4 zwei Schaltbilder zur Beschaltung von Operationsverstärkern.

Sensor, Abgleichwiderstände und Operationsverstärker können auch auf einem Chip monolithisch integriert sein.

Fig. 1 zeigt ein n+ Silicium-Substrat 2 auf dem epitaktisch eine n-Siliciumschicht 3 abgeschieden ist. Über der n-dotierten Siliciumschicht 3 ist ganzflächig eine Siliciumdioxidschicht 4 abgeschieden. Die spezielle Substratwahl unter Berücksichtigung der für die Druckempfindlichkeit optimalen Kristallrichtung wird in Hinblick auf die Erzeugung von Drucksensoren getroffen. Darüber kann ganzflächig zusätzlich eine dünne Siliciumnitridschicht 5 abgeschieden sein. Auf der Siliciumdioxidschicht 4 bzw. auf der darüber angebrachten Siliciumnitridschicht 5 sind die Abgleichwiderstände $R_K$ bzw. $R_{K'}$ in Form von Polysiliciumwiderständen angebracht. K bedeutet eine natürliche Zahl zwischen 1 und 7. $R_K$ bzw. $R_{K'}$ sind die entsprechend bezeichneten Widerstände aus den Fig. 2 bis 4. Die Widerstände $R_K$ bzw. $R_{K'}$ können somit nicht nur Abgleichwiderstände einer Druckmesszelle sein, sie können vielmehr auch Beschaltungswiderstände für Operationsverstärker z.B. nach den Fig. 3 und 4 sein.

Über den Abgleichwiderständen $R_K$ bzw. $R_{K'}$ ist ganzflächig eine Passivierungsschicht 6 bestehend aus z.B. Siliciumnitrid angebracht. Die Passivierungsschicht 6 ist als λ/4-Schicht ausgebildet.

Die Dicke D der Isolationsschicht unterhalb der Abgleichwiderstände $R_K$ bzw. $R_{K'}$ ist praktisch gegeben durch die Dicke der Siliciumdioxidschicht 4, da die Dicke der Siliciumnitridschicht 5 vernachlässigt werden kann. Die Isolationsschicht ist als λ/2-Schicht ausgebildet.

Das $n^+$-dotierte Siliciumsubstrat 2 ist im Bereich der Brückenwiderstände $R_b$ in der Dicke reduziert, um im Bereich der Brückenwiderstände $R_b$ ein dünnschichtiges, druckempfindliches Sensorplättchen zu bilden.

Durch die Ausbildung der Passivierungsschicht 6 als λ/4-Schicht wird eine optimale Einkopplung der Laserleistung in die polykristallinen Siliciumwiderstände erreicht. Durch Einsatz eines Argonlasers mit Strichfokus lassen sich problemlos Breiten von ca. 100 μm einwandfrei rekristallisieren, ohne dass an den Rändern der Strukturen Bestrahlungsschäden auftreten. Durch die Ausbildung der Isolationsschicht, das heisst der Siliciumdioxidschicht 4 und der Siliciumnitridschicht 5 unterhalb der Polysiliciumwiderstände, als λ/2-Schicht werden optimale Reflexionsbedingungen an der Isolatorschicht geschaffen, so dass die Laserstrahlung nicht in die Isolatorschicht eindringen oder durch die Isolatorschicht hindurchgehen kann. Dadurch werden Beschädigungen des Substrats vermieden. Insbesondere bleibt die isolierende Wirkung der Isolatorschicht erhalten.

In Fig. 1 sind auch die Brückenwiderstände $R_b$ als Polysiliciumwiderstände ausgeführt. Die Siliciumdioxidschicht 4 und die Siliciumnitridschicht 5 weisen über die gesamte Halbleiteroberfläche eine konstante Schichtstärke auf. Die Polysilicium-Brückenwiderstände sind dabei auf der druckempfindlichen Membran so angeordnet, dass eine maximale Druckempfindlichkeit erzielt wird.

Zur Herstellung anderer Sensoren wie beispielsweise Temperatursensoren, Positionssensoren oder anderer abgleichbarer Halbleiterbauelemente können beliebige andere geeignete Substrate verwendet werden.

Fig. 2 zeigt ein Schaltbild 8 zur Beschaltung einer Sensormesszelle mit Abgleichwiderständen. Die eigentliche Sensorzelle wird durch die Brückenwiderstände $R_b$ gebildet.

Am Brückeneingang liegt an einem Anschluss 11 die Speisespannung $U_S$ an, während ein Anschluss 12 geerdet ist. Über dem Brückenabgriff 13, 14 gelangt ein Brückensignal $U_{br}$ an die Ausgänge 15 und 16. Die Abgleichwiderstände $R_6$ und $R_{6'}$ sind zum Feinabgleich der Brückenzweige 18 und 19 angebracht und dienen zum Offsetabgleich. Die Grösse der Widerstände $R_6$ und $R_{6'}$ beträgt 250 Ω bei einem Betrag der Brückenwiderstände $R_b$ von ca. 2 kΩ. Gemäss ihrer Funktion sollen die Widerstände $R_6$ und $R_{6'}$ etwa den gleichen Temperaturkoeffizienten hinsichtlich des Widerstandswertes aufweisen wie die Brückenwiderstände $R_b$. Zum Abgleich des Temperaturkoeffizienten des Offsets der gesamten Brücke samt Abgleichwiderständen dienen Abgleichwiderstände $R_5$ und $R_{5'}$. Der Temperaturkoeffizient bezüglich des Widerstandes von $R_5$ und $R_{5'}$ soll annähernd 0 sein; die Grösse der Widerstände $R_5$ und $R_{5'}$ soll 50 kOhm betragen. Die Abgleichwiderstände $R_4$ und $R_{4'}$ dienen zur Kompensation der Temperaturabhängigkeit der Druckempfindlichkeit. Der Temperaturkoeffizient der Widerstände $R_4$ und $R_{4'}$ muss negativ und möglichst gross sein, was durch das entsprechende Symbol in der Zeichnung angedeutet ist. Die Abgleichwiderstände $R_7$ und $R_{7'}$ dienen zur exakten Einstellung der Empfindlichkeit der gesamten Brückenanordnung samt Abgleichwiderständen. Empfindlichkeitsschwankungen der Brückenanordnung können z.B. durch Dickenschwankungen der Membran bedingt sein. Der Temperaturkoeffizient hinsichtlich der Widerstände $R_7$ und $R_{7'}$ soll gleich dem Temperaturkoeffizienten der Brücke sein. Die Widerstände $R_7$ und $R_{7'}$ sollen einen Betrag von 2,5 kOhm aufweisen.

Fig. 3 stellt das Schaltbild 9 zur Beschaltung eines Operationsverstärkers 20 dar, wodurch neben einer Verstärkerfunktion auch eine Inverterfunktion erreicht wird. Die Beschaltungswiderstände $R_1$ und $R_{1'}$ betragen 2 kΩ, die Widerstände $R_2$ und $R_{2'}$ betragen 200 kΩ und der Widerstand $R_3$ beträgt 250 Ω. An den Eingang 21, 22 von Schaltbild 9 wird die Brückenspannung $U_{br}$ gelegt, während an der Stelle 23 die Ausgangsspannung $U_a$ entnommen werden kann und ein Ausgangsanschluss 24 geerdet ist. Das Schaltbild 8 weist eine Ausgangsspannung

$$U_a = - \frac{R_2}{R_1} U_{br}$$

auf. Dabei bedeuten $R_1$ und $R_2$ die Beschaltungswiderstände und $U_{br}$ die Brückenspannung.

Fig. 4 zeigt ein Schaltbild 10 zur Beschaltung eines Operationsverstärkers 20 im Gegensatz zu Fig. 3 als Stromausgangsvariante ohne Inverterfunktion. Die Widerstände $R_1$, $R_{1'}$, $R_2$, $R_{2'}$, $R_3$ dienen zur Beschaltung des Operationsverstärkers 20, während $R_v$ einen angeschlossenen Verbraucher-

widerstand andeutet. An den Stellen 21, 22 des Eingangs liegt wie bei Fig. 3 die Brückenspannung $U_{br}$ an; der Stelle 25 kann das Ausgangssignal in Form des Stromes $I_a$ entnommen werden und an den Verbraucherwiderstand $R_v$ angelegt werden. Für die Stromverstärkung $I_a$ gilt

$$I_a = \frac{R_2}{R_1 \cdot R_3} U_{br}.$$

Dabei sind $R_1$, $R_2$, $R_3$, die Beschaltungswiderstände nach Fig. 4 und $U_{br}$ die Brückenspannung.

Die Beschaltungswiderstände $R_1$, $R_{1'}$, $R_2$, $R_{2'}$ und $R_3$ nach den Fig. 3 und 4 können je nach Kundenwunsch zusammen mit den Abgleichwiderständen der Brücke als Polysiliciumwiderstände auf dem Chip einer Drucksensorzelle nach Fig. 1 als Widerstände $R_K$ bzw. $R_{K'}$ angebracht werden.

Um die Abgleichwiderstände nach Fig. 2 und die Beschaltungswiderstände nach den Fig. 3 und 4 als polykristalline Widerstände auf einem Halbleiterchip zu fertigen, sind lediglich zwei unterschiedliche Dotierungen im Bereich von 250 $\Omega$ bis 200 k$\Omega$ anzubringen. Da mit Ionenimplantation eine hohe Genauigkeit des Nennwiderstandes erzielt wird, wird die Implantation anderer Dotierungsarten vorgezogen.

Durch zwei unterschiedliche Dotierungsdosen können zwei Widerstandsgruppen, nämlich die Widerstandsgruppe I zwischen 250 $\Omega$ bis 2,5 k$\Omega$ und die Widerstandsgruppe II zwischen 500 k$\Omega$ bis 200 k$\Omega$, gebildet werden. Widerstandswerte innerhalb einer Widerstandsgruppe können durch unterschiedliche geometrische Formen eingestellt werden.

Die Widerstände $R_4$ und $R_{4'}$, die durch einen hohen negativen Temperaturkoeffizienten gekennzeichnet sind, werden entweder so Laserausgeheilt, dass die Stromrichtung im Widerstand quer zur Laser-Scan-Richtung verläuft, oder die Widerstände werden nur ofenausgeheilt.

Bei den übrigen Laser-ausgeheilten Abgleichwiderständen nach Fig. 2 wird hingegen darauf geachtet, dass die Richtung des Laser-Scan-Rasters parallel zur Stromrichtung im Widerstand verläuft, wodurch ein positiver Temperaturkoeffizient hinsichtlich des Widerstandes oder ein Temperaturkoeffizient ungefähr gleich Null mit sehr grosser Reproduzierbarkeit eingestellt wird.

Für den allgemeinen Funktionsabgleich einer Drucksensorzelle nach Fig. 1 ist an sich die Messung der Sensorsignale bei zwei unterschiedlichen Drücken und zwei unterschiedlichen Temperaturen erforderlich, wie dies oben erläutert wurde.

Bei der Herstellung von Drucksensoren unter Anwendung der Erfindung können in gewissen wichtigen Spezialfällen einige Abgleichwiderstände eingespart werden, wodurch die Herstellung vorteilhaft und der Sensor verbilligt werden kann.

Bei einem Spezialfall kann ein gleiches Temperaturverhalten der Brückenwiderstände $R_b$ und des Abgleichwiderstandes $R_6$, $R_{6'}$ so eingestellt werden, dass der Temperaturkoeffizient des Widerstandes Null ist.

Durch diese Massnahme wird zusätzlich der Vorteil eines temperaturunabhängigen Innenwiderstandes der Brückenschaltung erreicht, dem jedoch ein gewisser Verlust an Empfindlichkeit gegenübersteht. Vor- und Nachteile müssen im, jeweiligen Anwendungsfall gegeneinander abgewogen werden.

Bei einem zweiten Spezialfall wird über eine geeignete hohe Dotierung der Brückenwiderstände und des Abgleichwiderstandes $R_6$, $R_{6'}$ die Temperaturabhängigkeit der Empfindlichkeit der Brücke auf Null eingestellt.

Damit können eventuell die Widerstände $R_4$, $R_{4'}$ entfallen. Der mit der Brückenschaltung nach Fig. 2 erreichbare K-Faktor liegt um 50.

Bei einem dritten Spezialfall wird der Abgleich der Empfindlichkeit nicht am Widerstand $R_7$, $R_{7'}$ zur Herstellung einer Empfindlichkeits-normierten Druckmesszelle vorgenommen, sondern an den mitintegrierten Beschaltungswiderständen für die angedachten Operationsverstärker $R_2/R_1$ bzw. $R_2/R_1 \cdot R_3$.

## Patentansprüche

1. Sensor, der auf einem Substrat als Widerstände nur dotierte polykristalline Silizium-Widerstände aufweist, der eine vor dem Abgleich der Widerstände auf die Widerstände aufgebrachte Passivierungsschicht aufweist, bei dem die Widerstände durch räumlich selektive Laserausheilung, das bedeutet teilweise Rekristallisation, so abgeglichen sind, dass gleichzeitig ein minimaler Offset, eine ausreichende Empfindlichkeit und minimale Temperaturkoeffizienten desjenigen Widerstandes, an dem das Ausgangssignal anliegt, sowie des Offsets und der Empfindlichkeit erzielt sind.

2. Sensor nach Anspruch 1, dadurch gekennzeichnet, dass die Dicke d der Passivierungsschicht

$$d = \frac{\lambda_{vac} (2i + 1)}{4 \cdot n_1}$$

beträgt, wobei $\lambda_{vac}$ die Wellenlänge der verwendeten Laserstrahlung im Vakuum, i Null oder eine natürliche Zahl und $n_1$ den Brechungsindex der Passivierungsschicht bedeuten, wodurch eine optimale Einkopplung der Laserstrahlung gewährleistet ist.

3. Sensor nach Anspruch 1 oder 2, dadurch gekennzeichnet, dass das Substrat unterhalb der polykristallinen Silicium-Widerstände mindestens eine mit optimalen Reflexionsbedingungen ausgestattete Isolationsschicht der Dicke

$$D = \frac{\lambda_{vac} (i + 1)}{2 \cdot n_2}$$

enthält, wobei $\lambda_{vac}$ die Wellenlänge der verwendeten Laserstrahlung im Vakuum, i Null oder eine natürliche Zahl und $n_2$ den Brechungsindex der Isolationsschicht bedeuten.

4. Sensor nach einem der Ansprüche 1 bis 3, dadurch gekennzeichnet, dass die Widerstände piezoresistiv und in einer Brückenschaltung angeordnet sind, um einen Druckmesser zu bilden.

5. Sensor nach einem der Ansprüche 1 bis 3, dadurch gekennzeichnet, dass die Widerstände einen Temperatursensor oder einen Positionssensor bilden.

6. Sensor nach Anspruch 4, dadurch gekennzeichnet, dass die Widerstände auch zusätzlich Kompensationswiderstände der Brückenschaltung bilden, die eine Kompensation des Temperaturkoeffizienten des Offsets der Brücke bewirken.

7. Sensor nach Anspruch 4, dadurch gekennzeichnet, dass die Widerstände zusätzlich auch Abgleichwiderstände bilden, die die gleiche Dotierung wie die piezoresistiven Widerstände haben, um eine Kompensation des Temperaturkoeffizienten der Brücke zu bewirken.

8. Sensor nach Anspruch 7, dadurch gekennzeichnet, dass die piezoresistiven Widerstände und die Abgleichwiderstände derart dotiert sind, dass der Temperaturkoeffizient den Wert Null hat.

9. Sensor nach Anspruch 8, dadurch gekennzeichnet, dass die Dotierungskonzentration der Widerstände zwischen $10^{18}$ und $10^{19}$ cm$^{-3}$ liegt.

10. Sensor nach einem der Ansprüche 1 bis 9, dadurch gekennzeichnet, dass die Dotierung mit Bor oder Arsen oder Phosphor erfolgt.

11. Sensor nach Anspruch 4, dadurch gekennzeichnet, dass die piezoresistiven Widerstände derart dotiert sind, dass die Temperaturabhängigkeit ihrer Empfindlichkeit den Wert Null hat.

12. Sensor nach Anspruch 11, dadurch gekennzeichnet, dass die Dotierungskonzentration der Widerstände den Wert $2 \cdot 10^{20}$ cm$^{-3}$ hat.

13. Sensor nach Anspruch 4, dadurch gekennzeichnet, dass der Brücke ein Operationsverstärker nachgeschaltet ist, und dass zwischen Brücke und Operationsverstärker polykristalline Widerstände nach Anspruch 1 liegen.

14. Verfahren zum Herstellen des Sensors nach Anspruch 1, dadurch gekennzeichnet, dass auf einem n$^+$-Siliciumsubstrat (2) epitaktisch eine n-Siliciumschicht (3) abgeschieden wird, dass ganzflächig eine Siliciumdioxidschicht (4) auf das gesamte Halbleitersubstrat aufgebracht wird, dass ggf. darüber ganzflächig zusätzlich eine dünne Siliciumnitridschicht (5) abgeschieden wird, dass auf der Siliciumnitridschicht (5) oder Siliciumoxidschicht ganzflächig amorphes Silicium aufgebracht wird, das Teile der aufgebrachten amorphen Siliciumschicht so dotiert werden, dass sich eine, maximal zwei unterschiedliche Dotierungskonzentrationen ergeben, dass anschliessend ein Laserausheilen bestimmter Bereiche der amorphen Siliciumschicht in der Weise erfolgt, dass der Laser diese Bereiche zeilenweise ausleuchtet, dass eine Ofenausheilung der gesamten Halbleiterscheibe erfolgt, dass eine Strukturierung der amorphen Siliciumschicht erfolgt, wodurch die verschiedenen Polysilicium-Widerstände samt Brückenwiderständen als Drucksensoren entstehen, dass eine erneute Passivierung erfolgt, dass mittels rückseitigem Ätzen die Dicke der Substratschicht (2) an der Stelle der Brückenwiderstände ($R_b$) reduziert wird und dass schliesslich die polykristallinen Silicium-Widerstände eine Feineinstellung mittels Lasertrimmen erfahren.

**Claims**

1. Sensor which exhibits only doped polycrystalline silicon resistances as resistances on a substrate, which exhibits a passivation layer which is applied to the resistances before the resistances are calibrated, in which the resistances are calibrated by spatially selective laser recovery, which means partial recrystallization, in such a manner that, at the same time, a minimum offset, sufficient sensitivity and minimum temperature coefficients of the resistance, across which the output signal is present, and of the offset and of the sensitivity, are achieved.

2. Sensor according to Claim 1, characterized in that the thickness d of the passivation layer ist

$$d = \frac{\lambda_{vac}\,(2i+1)}{4 \cdot n_1}$$

where $\lambda_{vac}$ is the wavelength of the laser radiation used in a vacuum, i is zero or a natural number and $n_1$ is the index of refraction of the passivation layer which ensures optimum coupling-in of the laser radiation.

3. Sensor according to Claim 1 or 2, characterized in that the substrate contains at least one insulation layer, which is equipped with optimum reflection conditions, of the thickness

$$D = \frac{\lambda_{vac}\,(i+1)}{2 \cdot n_2}$$

underneath the polycrystalline silicon resistances, where $\lambda_{vac}$ is the wavelength of the laser radiation used in a vacuum, i is zero or a natural number and $n_2$ is the index of refraction of the insulation layer.

4. Sensor according to one of Claims 1 to 3, characterized in that the resistances are piezoresistive and arranged in a bridge circuit in order to form a pressure sensor.

5. Sensor according to one of Claims 1 to 3, characterized in that the resistances form a temperature sensor or a position sensor.

6. Sensor according to Claim 4, characterized in that the resistances also additionally form compensation resistances of the bridge circuit which effect a compensation of the temperature coefficient of the offset of the bridge.

7. Sensor according to Claim 4, characterized in that the resistances additionally also form calibration resistances which have the same doping as the piezoresistive resistances in order to effect a compensation of the temperature coefficient of the bridge.

8. Sensor according to Claim 7, characterized in that the piezo-resistive resistances and the calibration resistances are doped in such a manner that the temperature coefficient has the value zero.

9. Sensor according to Claim 8, characterized in that the doping concentration of the resistances lies between $10^{18}$ and $10^{19}$ cm$^{-3}$.

10 Sensor according to one of Claims 1 to 9, characterized in that the doping is performed by means of boron or arsenic or phosphorous.

11. Sensor according to Claim 4, characterized in that the piezo-resistive resistances are doped in such a manner that the temperature dependence of their sensitivity has the value zero.

12. Sensor according to claim 11, characterized in that the doping concentration of the resistances has the value $2 \times 10^{20}$ cm$^{-3}$.

13. Sensor according to Claim 4, characterized in that the bridge is followed by an operational amplifier and that polycrystalline resistances according to Claim 1 are located between the bridge and the operational amplifier.

14. Method for producing the sensor according to Claim 1, characterized in that an n-type silicon layer (3) is epitaxially deposited on an n$^+$-type silicon substrate (2), that a silicon dioxide layer (4) is applied to the entire semiconductor substrate area, that, if necessary, a thin silicon nitride layer (5) is additionally deposited over the entire area above the semiconductor substrate, that amorphous silicon is applied to the entire area of the silicon nitride layer (5) or silicon oxide layer, that parts of the amorphous silicon layer applied are doped in such a manner that one or a maximum of two different doping concentrations are obtained, that subsequently a laser recovery of particular areas of the amorphous silicon layer is effected in such a manner that the laser illuminates these areas line by line, that the entire semiconductor wafer is subjected to a furnace recovery, that a structuring of the amorphous silicon layer is effected as a result of which the various polysilicon resistances including bridge resistances are produced as pressure sensors, that a new passivation is effected, that the thickness of the substrate layer (2) is reduced at the point of the bridge resistances (R$_b$) by means of etching at the rear, and that finally the polycrystalline silicon resistances are finely calibrated by means of laser trimming.

**Revendications**

1. Capteur qui comport sur un substrat, en tant que résistances, uniquement des résistances au silicium polycristallin dopées, qui comporte une couche de passivation déposée sur les résistances, avant l'équilibrage de celles-ci, dans lequel les résistances sont, par un recuit sélectif et local au laser, ce qui signifie une recristallisation partielle, équilibrée de telle façon que l'on obtient simultanément une dérive minimale, une sensibilité suffisante et un coefficient de température minimum de la résistance au niveau de laquelle se situe le signal de sortie, ainsi que de la dérive et de la sensibilité.

2. Capteur selon la revendication 1, caractérisé par le fait que l'épaisseur d de la couche de passivation est donnée par

$$d = \frac{\lambda_{vac}\,(2i+1)}{4 \cdot n_1}$$

$\lambda_{vac}$ étant la longueur d'onde du rayonnement laser utilisé dans le vide, i étant égale à zéro ou à un nombre naturel et n$_1$ étant l'indice de réfraction de la couche de passivation, grâce à quoi on est assuré d'un couplage optimum du rayonnement laser.

3. Capteur selon la revendication 1 ou 2, caractérisé par le fait que le substrat en-dessous des résistances au silicium polycristallin comportent une couche d'isolation possédant les conditions maximales de réflexion, dont l'épaisseur est donnée par la relation

$$D = \frac{\lambda_{vac}\,(i+1)}{2 \cdot n_2}$$

$\lambda_{vac}$ étant la longueur d'onde du rayonnement laser utilisé sous vide, i étant égal à zéro ou à un nombre naturel et n$_2$ représentant l'indice de réfraction de la couche isolante.

4. Capteur selon l'une des revendications 1 à 3, caractérisé par le fait que les résistances sont piézorésistives et disposées dans un circuit en pont, pour former un manomère.

5. Capteur selon l'une des revendications 1 à 3, caractérisé par le fait que les résistances forment un capteur de température ou un capteur de position.

6. Capteur selon la revendication 4, caractérisé par le fait que les résistances forment, de plus, des résistances de compensation du circuit en pont et qui provoquent une compensation des coefficients de température de la dérive du pont.

7. Capteur selon la revendication 4, caractérisé par le fait que les résistances forment, de plus, également des résistances de compensation qui ont le même dopage que celui des résistances piézorésistives, afin de provoquer une compensation du coefficient de température du pont.

· 8. Capteur selon la revendication 7, caractérisé par le fait que les résistances piézorésistives et les résistances de compensation sont dopées de telle façon que le coefficient de température assume la valeur zéro.

9. Capteur selon la revendication 8, caractérisé par le fait que la concentration de dopage des résistances se situe entre $10^{18}$ et $10^{19}$ cm$^{-3}$.

10. Capteur selon l'une des revendications 1 à 9, caractérisé par le fait que le dopage est effectué avec du bore, avec de l'arsenic ou avec du phosphore.

11. Capteur selon la revendication 4, caractérisé par le fait que les résistances piézorésistives sont dopées de telle façon que leur sensibilité par rapport à la température assume la valeur zéro.

12. Capteur selon la revendication 11, caractérisé par le fait que la concentration en dopage des résistances présente la valeur $2 \cdot 10^{20}$ cm$^{-3}$.

13. Capteur selon la revendication 4, caractérisé par le fait qu'en aval du pont est monté un amplificateur opérationnel, et qu'entre le pont et l'amplificateur opérationnel, sont prévues des résistances polycristallines selon la revendication 1.

14. Procédé pour la fabrication du capteur selon la revendication 1, caractérisé par le fait que sur un substrat de silicium du type n$^+$ (2) est déposée épitaxialement une couche de silicium de type n (3),

que l'on dépose, d'un seul tenant, une couche de dioxyde de silicium (4) sur la totalité du substrat semiconducteur,

qu'éventuellement sur celle-ci et d'un seul tenant, on dépose, en plus, une mince couche de nitrure de silicium (5),

que sur la couche de nitrure de silicium (5) ou sur la couche d'oxyde de silicium on dépose, d'un seul tenant, du silicium amorphe,

que des parties de la couche de silicium amorphe qui a été déposée, sont dopées de telle façon qu'il en résulte une, au maximum deux concentrations de dopage différentes,

qu'ensuite on procède à un recuit au laser de zones déterminées de la couche de silicium amorphe, et cela de telle façon,

que le laser irradie ligne par ligne ces zones,

qu'on procède ensuite à un recuit au four de la totalité du disque semiconducteur,

qu'on procède ensuite à une structuration de la couche de silicium amorphe, grâce à quoi se forment les différentes résistances au polysilicium, y compris les résistances du pont, sous la forme de capteurs de pression,

qu'on procède ensuite à une nouvelle passivation,

qu'à l'aide d'une attaque sur le côté postérieur, on réduit l'épaisseur de la couche du substrat (2) à l'emplacement des résistances du pont ($R_b$), et qu'ensuite les résistances au silicium polycristallin subissent un ajustement fin à l'aide d'un rognement au laser.

FIG 1

FIG 2

FIG 3

FIG 4